# FASCICULE DE BREVET EUROPEEN

(11) **EP 2 422 445 B1**
(45) Date de publication et mention de la délivrance du brevet: **07.03.2018**
(21) Numéro de dépôt: 10719102.5
(22) Date de dépôt: 22.04.2010
(51) Int. Cl.: H02M 7/217, H02M 1/00

(54) **ALIMENTATION À TENSION DE SORTIE ADAPTÉE**
STROMVERSORGUNG MIT ANGEPASSTER AUSGANGSSPANNUNG
POWER SUPPLY WITH ADAPTED OUTPUT VOLTAGE

(30) Priorité: 22.04.2009 FR 0901942
(43) Date de publication de la demande: 29.02.2012
(73) Titulaire: SOMFY ACTIVITES SA, 74300 Cluses (FR)
(72) Inventeur: TRANCHAND, Alain, F-74330 La Balme de Sillingy (FR); LAMBERSEND, Bruno, F-74130 Bonneville (FR)
(74) Mandataire: Rossi, Alexandra
(86) Numéro de dépôt international: PCT/IB2010/051769
(87) Numéro de publication internationale: WO 2010/122513

(56) Documents cités:
- EP-A- 0 576 370
- EP-A- 1 626 154
- JP-A- 2006 304 569
- US-B1- 6 182 455

## Description

L'invention concerne un actionneur domotique motorisé et un procédé d'alimentation et de contrôle de l'actionneur. L'actionneur permet la mise en mouvement d'un élément mobile tel qu'une porte, un volet roulant, un verrou, une trappe de ventilation, un store etc.

Un circuit d'alimentation et de contrôle est raccordé au secteur alternatif et, outre un moteur, l'actionneur comprend plusieurs dispositifs de contrôle : en particulier une unité de contrôle telle qu'un microcontrôleur, un récepteur d'ordres, par exemple de type radiofréquences, et un organe de commutation pour commande de l'alimentation du moteur, par exemple un relais. Par ailleurs, l'actionneur peut également comprendre un dispositif capteur de position et/ou de déplacement

Il est important de réduire la puissance consommée par ces dispositifs dans les périodes où l'actionneur n'exécute pas un ordre de mouvement. En effet, ces mouvements sont en général de faible durée (par exemple moins de 2 minutes par jour pour un volet roulant) et la puissance absorbée par le moteur représente une faible énergie en comparaison de l'énergie pouvant être dissipée par les dispositifs de contrôle. Pour une puissance absorbée sur le secteur par le moteur supposée égale à 90 watts, la consommation sur une journée vaut : 90 x 2/60 = 3 wattheures, donc un peu plus de 1 KWh par an. Si la consommation moyenne des dispositifs de contrôle est supposée égale à 1 watt lorsque ceux-ci sont en attente d'un ordre de mouvement, c'est cette fois 24 wattheures qui sont consommés par jour, donc près de 10 KWh par an. Cet écart n'est pas acceptable. De plus, aussi bien les normes actuelles que futures imposent de réduire drastiquement la consommation des dispositifs de contrôle lorsque ceux-ci sont dans un mode de veille, par exemple dans l'attente d'un ordre de mouvement.

La demande de brevet FR 2920060 décrit un dispositif d'économie d'énergie pour l'équipement d'une machine électrodomestique comme une machine à laver ou une cuisinière. Ce dispositif comporte un régulateur en amont duquel sont disposés en parallèle un circuit limiteur et un circuit pour courant fort. Selon le mode d'activité (marche ou veille), un circuit de contrôle active ou non le circuit pour courant fort, de manière à économiser l'énergie en mode veille.

La demande de brevet EP 1837972 décrit un circuit d'alimentation pour un dispositif électronique tel qu'un téléviseur comprenant un tuner nécessitant une tension continue plus élevée que le microcontrôleur gérant le téléviseur. Le circuit d'alimentation comprend un convertisseur AC/DC avec deux sorties. En fonctionnement normal, une première sortie délivre une tension V1 suffisante pour alimenter le tuner et l'amont d'un régulateur, tandis qu'une deuxième sortie délivre une tension V2. Ces deux tensions sont appliquées aux anodes de deux diodes à cathodes communes, servant ensuite à l'alimentation du microcontrôleur. La tension V2 est légèrement supérieure à la tension de sortie du régulateur, ce qui a pour effet de bloquer la diode placée en sortie du régulateur : en fonctionnement normal, c'est donc la deuxième sortie du convertisseur qui alimente le microcontrôleur. En mode veille, le microcontrôleur agit sur un circuit de contrôle relié au convertisseur et provoquant une diminution des tensions V1 et V2. Cette fois la tension V2 est inférieure à la tension de sortie du régulateur, et c'est donc lui qui alimente le microcontrôleur.

La demande de brevet JP 2006-304569 décrit un circuit d'alimentation pour un dispositif tel qu'une imprimante ou un photocopieur comprenant un moteur. Le circuit comprend un régulateur à découpage dont on ajuste le fonctionnement à l'aide d'un optocoupleur, de manière à obtenir alternativement une première tension de sortie (par exemple 24V) en mode de fonctionnement et une deuxième tension de sortie (par exemple 8V) en mode de veille. Ainsi, les pertes dans un convertisseur DC/DC sont réduites. Par ailleurs, le circuit comprend un dispositif de coupure automatique de la charge lorsque la tension est celle du mode de veille. La réduction de tension de sortie est obtenue en agissant sur un circuit intégré de référence de tension.

Le brevet EP 0 576 370 décrit un dispositif d'alimentation d'un moteur pour assurer le déplacement d'un élément d'occultation. Ce dispositif comprend une alimentation permettant de fournir une tension ajustable à un moteur alimenté par un convertisseur continu-continu, afin de faire varier la vitesse du moteur. En mode veille, l'alimentation fournit une tension réduite pour éviter un emballement de l'alimentation.

Le brevet US 6,182,455 décrit un appareil de contrôle d'une enceinte réfrigérée comprenant un moteur de ventilation pouvant être alimenté par différents niveaux de tension issus d'un convertisseur.

Le brevet EP 1 626 154 décrit un actionneur domotique auquel l'invention pourrait s'appliquer. Cet actionneur domotique comprend un organe de commutation à relais ou à transistors.

L'invention a donc pour but de réduire la consommation en veille, et dans certaines phases de fonctionnement, d'un actionneur domotique comprenant un convertisseur d'alimentation, simplement désigné par « convertisseur ». Le convertisseur permet d'alimenter plusieurs éléments situés en aval du convertisseur, notamment des moyens électroniques de contrôle de l'actionneur et/ou de commutation et/ou de réception radio. La puissance consommée considérée n'est pas la puissance consommée par le convertisseur lui-même mais par les éléments situés en aval de ce convertisseur. En particulier, une réduction de cette puissance dans le mode veille est obtenue par réduction de la tension de sortie du convertisseur, valeur par laquelle sont multipliés les divers courants de veille pour déterminer la puissance consommée en mode de veille.

De même, l'invention permet de réduire la puissance consommée par l'actionneur pendant certaines phases de fonctionnement en adaptant dynamiquement la tension de sortie du convertisseur à la nature ou à l'état des éléments situés en aval du convertisseur.

Pour des raisons économiques et techniques, un seul convertisseur AC/DC est utilisé pour transformer la tension alternative (AC) du secteur alternatif en une tension sensiblement continue (DC) de faible valeur qui soit utilisable par les différents dispositifs de contrôle. Cependant, ces dispositifs n'ont pas tous la même tension de fonctionnement. Par exemple, un relais économique nécessite une tension de bobine égale à 12 V (et de ce fait nécessite un courant plus faible qu'un relais de moindre tension nominale), tandis qu'un capteur de position à effet Hall fonctionne entre 4 et 18 volts, qu'un récepteur radiofréquences nécessite 3 volts, alors qu'un microcontrôleur peut encore fonctionner sous 2 volts.

Ces valeurs évoluent bien entendu selon les familles de composants et les progrès technologiques. Par ailleurs, il est souvent problématique d'alimenter directement un récepteur radiofréquences par un convertisseur AC/DC à découpage : cela se traduit par une perte de sensibilité du récepteur. On a alors intérêt à insérer un régulateur linéaire, jouant un rôle de tampon, entre le convertisseur et le récepteur radiofréquences. L'optimum technico-économique pousse donc en général à disposer un régulateur de tension en sortie d'un convertisseur AC/DC. En amont du régulateur sont alimentés l'organe de commutation et le capteur, en aval du régulateur sont alimentés le récepteur d'ordres et le microcontrôleur.

C'est donc le plus souvent l'organe de commutation qui détermine la tension de sortie du convertisseur, et donc la valeur par laquelle sont multipliés les divers courants de veille pour déterminer la puissance consommée en mode de veille. Il est clair qu'une tension nominale élevée pour l'organe de commutation pénalise fortement cette puissance, ce qui est d'autant plus regrettable que l'organe de commutation lui-même ne consomme rien en mode de veille.

L'invention améliore les dispositifs de l'art antérieur en ce qu'elle utilise un circuit d'alimentation et de contrôle avec un niveau ou avec deux niveaux de tension réduite. Ce circuit est obtenu par ajout d'un seul composant ou de deux composants sur un convertisseur de l'art antérieur, ce qui permet de modifier très simplement des gammes existantes d'actionneur en vue d'un fonctionnement optimisé en mode de veille.

L'actionneur domotique selon l'invention comprend un moteur pour la manoeuvre d'un élément mobile dans un bâtiment, un récepteur d'ordres, une unité de contrôle, un convertisseur à sortie unique, au moins un organe de commutation destiné à l'alimentation du moteur. Il est caractérisé en ce que l'organe de commutation et l'entrée d'un régulateur sont directement raccordés à la sortie du convertisseur tandis que l'unité de contrôle et le récepteur d'ordres sont raccordés à la sortie du régulateur, en ce que, dans un mode de sommeil, l'unité de contrôle est alimentée avec une tension d'alimentation inférieure à la tension minimum d'alimentation du récepteur d'ordres et en ce que ledit actionneur comprend un moyen de commande d'un premier niveau réduit de la tension de sortie du convertisseur, activable par l'unité de contrôle, ce premier niveau réduit étant inférieur à une tension minimum d'activation de l'organe de commutation.

L'actionneur domotique selon l'invention peut comprendre un moyen de commande d'un deuxième niveau réduit de la tension de sortie du convertisseur, ce deuxième niveau réduit étant inférieur au premier niveau réduit.
Selon l'invention, le moyen de commande d'un niveau réduit peut relier à une masse électrique du convertisseur l'anode d'une diode Zener dont la cathode est raccordée à une entrée de contrôle du convertisseur.

L'actionneur domotique selon l'invention peut comprendre un moyen de mise en court-circuit du régulateur entre son entrée et sa sortie.

Selon l'invention, le premier niveau réduit peut être égal ou supérieur à la tension de seuil du régulateur.

Selon l'invention, le deuxième niveau réduit peut être inférieur à la tension de seuil du régulateur.

L'unité de contrôle selon l'invention peut comprendre un timer dont une tension de fonctionnement est inférieure à une tension nominale du récepteur d'ordres.

Selon l'invention, le deuxième niveau réduit peut être égal à la tension minimum de fonctionnement du timer.

Selon l'invention, une sortie du timer peut constituer le moyen de commande du deuxième niveau réduit de la tension de sortie du convertisseur.

Selon l'invention, le convertisseur peut être de type de type abaisseur Alternatif-Continu (AC-DC).

Selon l'invention, le convertisseur peut-être de type Continu-Continu (DC-DC).

Selon l'invention, l'organe de commutation peut comprendre un relais ou un triac si le moteur est de type alternatif à induction et l'organe de commutation peut comprendre un onduleur si le moteur est de type brushless à aimants permanents.

Selon l'invention, le procédé d'alimentation et de contrôle d'un actionneur domotique tel que défini précédemment comprend une étape d'adaptation dynamique du niveau de tension de sortie du convertisseur à un état de l'actionneur, une étape de sommeil et une étape d'alimentation de l'unité de contrôle avec une tension d'alimentation inférieure à la tension minimum d'alimentation du récepteur d'ordres, pendant l'étape de sommeil.
Le procédé d'alimentation et de contrôle selon l'invention peut comprendre successivement l'étape de sommeil, une étape d'écoute et une étape de fonctionnement si un signal de commande est détecté pendant l'étape d'écoute, chaque étape définissant un état de l'actionneur, et dans lequel la tension de sortie du convertisseur est égale à une tension permettant l'activation de l'organe de commutation pendant l'étape de fonctionnement.

Dans le procédé d'alimentation et de contrôle selon l'invention, pendant l'étape de sommeil, peut avoir lieu l'opération suivante :
- un capteur de position de l'actionneur n'est pas alimenté.

La figure 1 représente un actionneur domotique motorisé selon l'invention.
La figure 2 représente un mode de réalisation connu d'un régulateur contenu dans l'actionneur.
La figure 3 représente graphiquement une caractéristique de transfert du régulateur, où figurent un mode de fonctionnement, un mode d'écoute et un mode de veille de l'actionneur.
La figure 4 représente un procédé d'alimentation et de contrôle de l'actionneur.
La figure 5 représente une première variante du procédé.
La figure 6 représente une variante d'une unité de contrôle de l'actionneur.
La figure 7 représente une deuxième variante du procédé.
La figure 8 représente une troisième variante du procédé.
La figure 9 représente une quatrième variante du procédé.
La figure 10 représente étape unique de description du procédé.

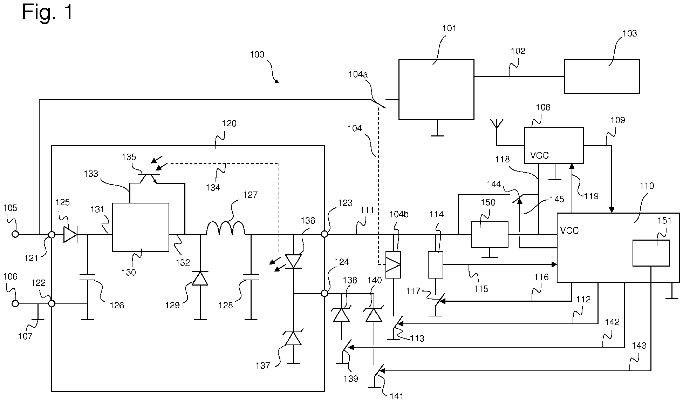

La figure 1 représente un actionneur domotique motorisé 100 selon l'invention. L'actionneur comprend un moteur électrique 101 dont l'arbre de sortie 102 entraîne un réducteur 103. Une sortie du réducteur entraîne une charge domotique non représentée, telle qu'un élément mobile dans un bâtiment.

Le moteur électrique est raccordé à un premier conducteur 105 d'une source électrique, par exemple le conducteur de phase d'un réseau alternatif, par un premier interrupteur commandé 104a d'un relais 104 servant d'organe de commutation. Alternativement un triac sert d'organe de commutation. Le moteur électrique est également raccordé à un deuxième conducteur 106 de la source électrique, par exemple le conducteur de neutre du réseau alternatif, servant de masse électrique 107 à l'ensemble de l'actionneur.

Le moteur est de type alternatif à induction. Alternativement, il est de type à courant continu et collecteur ou encore de type brushless à aimants permanents. Dans ce cas, l'organe de commutation est par exemple un onduleur triphasé.

L'invention est décrite dans le cas d'une source électrique alternative, mais la source électrique peut également être une source continue, par exemple un accumulateur alimenté par un panneau photovoltaïque.

L'actionneur comprend un récepteur d'ordres 108, préférentiellement de type radiofréquences, dont une sortie de signal 109 est raccordée à une unité de contrôle 110 telle qu'un microcontrôleur muni d'entrées et de sorties logiques et/ou analogiques.

Alternativement le récepteur d'ordres est de type infrarouge ou de type « courants porteurs ».

Une première ligne de commande 112 raccorde l'unité de contrôle à la commande d'un deuxième interrupteur commandé 113 branché entre la masse électrique et une extrémité de la bobine 104b du relais 104, dont l'autre extrémité est raccordée à une première ligne d'alimentation 111. Une deuxième ligne de commande 116 raccorde l'unité de contrôle à la commande d'un troisième interrupteur commandé 117 branché entre la masse électrique et une extrémité d'alimentation d'un capteur de position 114 dont l'autre extrémité est raccordée à la première ligne d'alimentation. Une ligne de sortie capteur 115 relie une sortie du capteur de position 114 à l'unité de contrôle.

Une deuxième ligne d'alimentation 118 est disposée à la sortie d'un régulateur 150 dont l'entrée est raccordée à la première ligne d'alimentation 111. Cette deuxième ligne d'alimentation est raccordée aux entrées d'alimentation VCC du récepteur d'ordres et de l'unité de contrôle.

Une troisième ligne de commande 119 raccorde l'unité de contrôle à une commande d'activation du récepteur d'ordres. Selon l'état actif ou inactif de cette ligne de contrôle, le récepteur d'ordres est en mode d'écoute, dans lequel il est capable de recevoir un signal extérieur, ou en mode de sommeil, dans lequel il consomme pas ou très peu d'énergie.

L'actionneur comprend un convertisseur 120, de type alternatif-continu (AC/DC) abaisseur, comportant une première borne d'alimentation 121 raccordée au premier conducteur du secteur alternatif, une deuxième borne d'alimentation 122 raccordée au deuxième conducteur du secteur alternatif et à la masse électrique, une borne de sortie 123 reliée à la première ligne d'alimentation et une borne de contrôle 124.

Une diode de redressement 125 et un condensateur de filtrage 126 sont disposés en série entre la première borne et la deuxième borne d'alimentation. Le point commun à ces deux composants est racccordé à l'entrée 131 d'un hacheur 130 dont la sortie 132 est raccordée d'une part à une inductance 127 en série avec un condensateur de sortie 128, et d'autre part à la cathode d'une diode de roue libre 129 dont l'anode est reliée à la masse électrique. Le point commun entre l'inductance et le condensateur de sortie est relié à la borne de sortie du convertisseur.

Le convertisseur contient en outre un optocoupleur 134 dont le transistor 135 a son collecteur relié à une borne de validation 133 du hacheur 130 et son émetteur relié à la sortie du hacheur. Quand le transistor 135 conduit, le hacheur 130 devient ouvert. La LED 136 de l'optocoupleur a son anode reliée à la borne de sortie et sa cathode reliée à la cathode d'une première diode Zener 137 dont l'anode est reliée à la masse électrique. La LED est donc parcourue par un courant dès que la tension de sortie du convertisseur dépasse la somme des seuils de conduction de la diode Zener et de la LED. Le hachage du hacheur est donc régulé par la tension de sortie.

Cette structure de convertisseur alternatif-continu est typique d'un convertisseur abaisseur, comme utilisé dans des actionneurs de l'art antérieur.

Dans le cas d'une source électrique continue, le convertisseur est de type continu-continu (DC/DC) et ne comprend pas la diode de redressement. Il peut avoir, selon les cas, une structure voisine, de type élévateur.

Une quatrième ligne de commande 142 raccorde l'unité de contrôle à la commande d'un quatrième interrupteur commandé 139 branché entre la masse électrique et l'anode d'une deuxième diode Zener 138 dont la cathode est reliée à la cathode de la première diode Zener par l'intermédiaire de la borne de contrôle 124.

De même, une cinquième ligne de commande 143 raccorde l'unité de contrôle à la commande d'un cinquième interrupteur commandé 141 branché entre la masse électrique et l'anode d'une troisième diode Zener 140 dont la cathode est reliée à la cathode de la première diode Zener par l'intermédiaire de la borne de contrôle.

On désigne par VZ1, VZ2 et VZ3 les tensions Zener respectives des trois diodes Zener 137, 138 et 140. On a VZ1 > VZ2 > VZ3. Si plusieurs diodes Zener sont disposées en parallèle, c'est celle de plus faible tension Zener qui fixe la tension de sortie du convertisseur.

Le convertisseur permet d'alimenter plusieurs éléments situés en aval du convertisseur, notamment l'unité de contrôle de l'actionneur et le récepteur d'ordres (via le régulateur) et l'organe de commutation (directement).

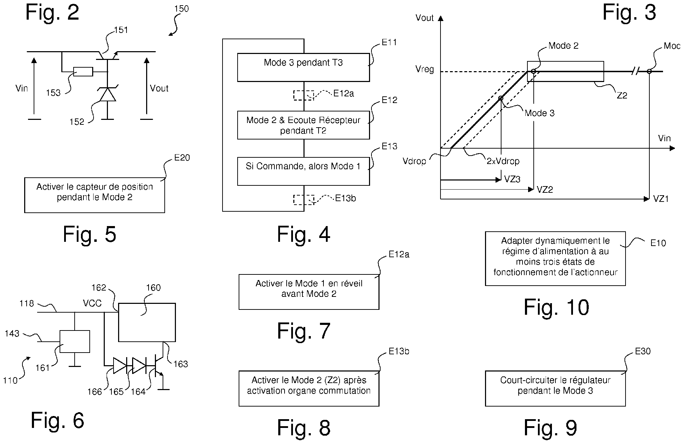

L'unité de contrôle contient un timer interne 151 dont une sortie change d'état pendant la durée d'une temporisation. Ce timer interne, à très faible consommation, est alimenté par la tension d'alimentation VCC de l'unité de contrôle. Il peut cependant fonctionner pour une tension d'alimentation inférieure à la tension nominale d'alimentation de l'unité de contrôle. Ces aspects seront précisés plus bas en référence à la figure 6. La sortie du timer interne est raccordée à la cinquième ligne de commande 143. Ainsi, cette ligne de commande devient active (et ferme l'interrupteur commandé 141) pendant la durée d'une temporisation du timer interne.

L'unité de contrôle peut être constituée par un microcontrôleur contenant un timer interne. Si ce microcontrôleur contient des sorties logiques de type à collecteur ouvert ou à drain ouvert, alors ces sorties dispensent des interrupteurs commandés reliés à chaque ligne de commande. En particulier, l'anode de la deuxième diode Zener 138 devient directement reliée à la quatrième ligne de commande 142, et l'anode de la troisième diode Zener 140 devient directement reliée à la cinquième ligne de commande 143.

Une sixième ligne de commande 145 relie l'unité de contrôle à la commande d'un sixième interrupteur commandé 144 disposé entre l'entrée et la sortie du régulateur 150.

La figure 2 représente un mode de réalisation connu d'un régulateur contenu dans l'actionneur. Le régulateur 150 utilise cette configuration simple de régulateur linéaire, comprenant un transistor bipolaire NPN 151, une diode Zener de régulateur 152 disposée entre la base du transistor et la masse électrique, et une résistance de polarisation 153 disposée entre le collecteur du transistor et sa base. L'entrée du régulateur est prise sur le collecteur du transistor et la sortie du régulateur est prise sur son émetteur. Alternativement, un régulateur intégré convient, pourvu que son mode de fonctionnement soit parfaitement spécifié par son fabricant y compris dans le cas de tension d'entrée inférieure à la plage normale de fonctionnement. De préférence, le régulateur est de type « Low Drop-out », comme décrit ci-dessous.

La figure 3 représente graphiquement une caractéristique de transfert du régulateur 150, c'est-à-dire sa tension de sortie Vout en fonction de sa tension d'entrée Vin. Si on suppose la diode Zener idéale et que la tension base émetteur du transistor est égale à 0.6 V quand la jonction base-émetteur conduit, cette caractéristique est simplement décalée de 0.6 V par rapport à la première bissectrice (Vout = Vin - 0.6V) tant que la diode Zener ne conduit pas. Ce décalage est qualifié de tension de déchet Vdrop ou « Drop-out Voltage ». Une valeur de 0.6 volts est considérée comme une faible valeur de tension de déchet (« Low Drop-out »), celle-ci pouvant atteindre ou dépasser 2 volts dans certains régulateurs.

Dès que la diode Zener 152 conduit, maintenant à ses bornes une tension VZ, la tension de sortie reste constante à VZ - 0.6, dite tension régulée Vreg. On dit que la tension de seuil du régulateur en entrée est égale à la somme de la tension de sortie régulée Vreg et de la tension de déchet Vdrop, ici égale à 0.6 V.

On a représenté sur cette figure les points représentatifs d'un mode de fonctionnement (Mode 1), d'un mode d'écoute (Mode 2) et d'un mode de sommeil (Mode 3) de l'actionneur.

Dans le mode de fonctionnement, les quatrième et cinquième lignes de commande (respectivement 142 et 143) ne sont pas activées par l'unité de contrôle. La tension de sortie du convertisseur est donc fixée par la première diode Zener et égale à VZ1, à la tension aux bornes de la LED près.
Cette tension est suffisante pour alimenter l'organe de commutation, normalement égale à la valeur nominale d'alimentation de ce dernier, par exemple 12 V.

Dans le mode d'écoute, la quatrième ligne de commande 142 est activée et la deuxième diode Zener 138 vient en parallèle sur la première diode Zener. C'est elle qui fixe la tension de sortie, égale à VZ2, à la tension aux bornes de la LED près. On a alors une tension de sortie du convertisseur légèrement supérieure à la tension minimum de fonctionnement du régulateur lorsqu'il fournit une tension constante.
Si le récepteur radiofréquences présente une tension d'alimentation nominale de 3 volts, alors la tension de sortie régulée Vreg du régulateur est prise à 3 volts. La tension minimum d'entrée du régulateur vaut alors 3.6 volts. En mode 2, la tension de sortie du convertisseur est donc prise légèrement supérieure à 3.6 V. Préférentiellement, on prendra cette tension dans une comprise entre la tension de seuil et la tension de seuil plus la tension de déchet. Cependant, une plus importante peut convenir tout en représentant un progrès significatif par rapport à l'art antérieur. Par exemple, une tension de 4.0 volts sera choisie si cette tension correspond au minimum de fonctionnement du capteur de position. Cette plage de fonctionnement peut s'exprimer en fonction de la tension régulée : par exemple, la tension d'entrée du régulateur en Mode 2 ne doit pas dépasser la tension minimum de plus de une fois la valeur de la tension régulée de ce dernier, ainsi que représenté par une zone Z2 de largeur Vreg indiquant une excursion possible de la tension d'entrée en Mode 2, par exemple comprise entre 3.6 et 6.6 volts avec les valeurs ci-dessus.

Dans le mode de sommeil, la cinquième ligne de commande 143 est activée et la troisième diode Zener 140 vient en parallèle sur la première diode Zener. C'est elle qui fixe la tension de sortie, égale à VZ3, à la tension aux bornes de la LED près. Cette valeur VZ3 est telle que la tension d'entrée du régulateur est inférieure à sa tension de seuil.
La tension de sortie du régulateur est alors simplement égale à la tension de sortie du convertisseur, diminuée de la tension de déchet. Cette tension est insuffisante pour permettre le fonctionnement du récepteur radiofréquences mais reste suffisante pour assurer le fonctionnement de l'unité de contrôle dans un mode de veille.

La figure 4 représente un procédé d'alimentation et de contrôle de l'actionneur.

Dans une première étape E11, l'actionneur est en mode de sommeil. Dans ce mode, l'unité de contrôle est alimentée sous très basse tension, par exemple 2 volts, et peut simplement maintenir ses sorties de commande dans un état précédemment défini, sans exécuter de programme. Les première, deuxième et troisième lignes de commande sont à l'état inactif. Seule la quatrième et la cinquième ligne de commande ont été placées dans un état actif avant le passage dans ce mode. La tension d'alimentation est fixée par la troisième diode Zener (140).

De même, le timer interne 151 reste actif, de manière à pouvoir décompter une temporisation de sommeil T3. Du fait que la troisième ligne de commande est à l'état inactif, le récepteur radiofréquences ne consomme aucun courant.

Une deuxième étape E12 est activée par la fin de la temporisation de sommeil. Le timer interne agit en effet directement sur l'état de la sortie de l'unité de contrôle raccordée à la cinquième ligne de commande, désactivant celle-ci. La tension d'alimentation devient cette fois fixée par la deuxième diode Zener, par exemple 3.6 volts. De ce fait, la tension sur la deuxième ligne d'alimentation devient égale à 3 volts, ce qui correspond à la tension nominale de fonctionnement du récepteur radiofréquences et à la tension nominale de fonctionnement du reste de l'unité de contrôle.

L'actionneur passe en mode d'écoute du récepteur d'ordres, pendant une durée T2 cette fois fixée par un timer normal du microcontrôleur. En mode d'écoute, la troisième ligne de commande est activée, soit pendant toute la durée du mode d'écoute, soit pendant de brefs intervalles de temps permettant au récepteur d'ordres de détecter la présence d'un signal et séparés par des intervalles prédéterminés en fonction de la structure d'une trame de signal.

Lors d'une troisième étape E13, on active le Mode de fonctionnement en présence de signal, c'est-à-dire que l'unité de contrôle fait passer la quatrième ligne de commande à l'état inactif. La tension de sortie du convertisseur est cette fois fixée par la première diode Zener, par exemple 12 volts, ce qui autorise l'alimentation de l'organe de commutation.

En mode de fonctionnement, l'ordre de mouvement est exécuté. Une fois l'ordre exécuté, il y a bouclage vers la première étape.

En absence de signal radio, ou si le signal radio ne contient pas d'ordre de mouvement, on repasse directement à la première étape.

Le récepteur d'ordres n'est donc alimenté que pendant de brèves périodes d'écoute T2 séparées par des périodes de sommeil T3 plus importantes. De plus, il est possible d'alimenter le récepteur de manière discontinue à l'intérieur d'une période d'écoute. L'énergie moyenne consommée est donc réduite à la fois par le fait du recours à une tension de fonctionnement minimum et par le fait de cette alimentation discontinue.

De plus, l'énergie moyenne consommée est significativement réduite par l'utilisation d'un deuxième niveau de tension réduite, inférieur au premier niveau de tension réduite, lorsque l'actionneur est dans un mode de sommeil.

La figure 5 représente une première variante du procédé, dans lequel une première étape complémentaire E20 s'insère dans la deuxième étape E12. Cette première étape complémentaire consiste à activer la première ligne de commande 116 pendant le Mode d'écoute. On profite donc du mode d'écoute pour alimenter le capteur de position et procéder à l'acquisition du signal de position. Ainsi, le capteur de position est lui-même alimenté pendant le Mode d'écoute, à la tension minimum fixée par la deuxième diode Zéner. Un mouvement de l'élément mobile entraîné par l'actionneur peut ainsi être détecté, en dehors des périodes de mouvement de l'actionneur. Un tel mouvement peut être le fait d'une anomalie dans un frein de l'actionneur, le fait du vent, le fait d'une action forcée manuellement par un utilisateur ou un enfant. Le capteur de position est par ailleurs alimenté pendant le mode de fonctionnement.

Dans une variante de réalisation de l'actionneur, le capteur de position peut être disposé en aval du régulateur, donc alimenté par la deuxième ligne d'alimentation.

La figure 6 représente une variante de l'unité de contrôle 110, dans laquelle l'unité de contrôle comprend un microcontrôleur 160 distinct d'un timer basse-tension 161. Le timer basse-tension 161 remplit les mêmes fonctions que le timer interne 151. Il est alimenté entre la deuxième ligne d'alimentation 118 et la masse électrique et sa sortie est raccordée à la cinquième ligne de commande 143. Il peut fonctionner sous une très faible tension d'alimentation, par exemple 1.2 volts. Le microcontrôleur 160 comprend les entrées et sorties de l'unité de contrôle 110 autres que celle raccordée à la cinquième ligne de commande dans la figure 1. Il est raccordé par une entrée d'alimentation positive 162 à la deuxième ligne d'alimentation 118, référencée VCC dans l'unité de contrôle 110, et il est normalement raccordé à la masse électrique par une entrée d'alimentation négative 163. Cependant, cette connexion à la masse électrique est ici commandée par un transistor 164 dont le collecteur est relié à l'entrée d'alimentation négative et dont l'émetteur est relié à la masse électrique. La base du transistor est reliée à la cathode d'une première diode 165 disposée en série avec une deuxième diode 166 dont l'anode est reliée à la deuxième ligne d'alimentation. En supposant une même valeur de tension égale à 0.6 V pour la conduction des jonctions PN de diodes ou de transistor, on a donc une connexion du microcontrôleur à la masse électrique pour une tension VCC supérieure ou égale à 1.8 volts. Pour une tension de 1.2 volts par exemple, le timer est alimenté alors que le microcontrôleur est déconnecté et que toutes ses sorties sont alors dans un état de haute impédance.

Si on ne tient pas compte de la tension aux bornes de la LED 136, les valeurs préférées des tensions Zener sont alors VZ1 = 12 volts, VZ2 = 3.6 volts et VZ3 = 1.8 volts pour obtenir respectivement 3 volts et 1.2 volts en Mode 2 et en Mode 3 sur VCC.

La figure 7 représente une deuxième variante du procédé, destinée à être surtout utilisée en relation avec la figure 6. Du fait de la déconnexion complète du microcontrôleur pendant le Mode 3, la quatrième ligne de commande n'est pas activée pendant le Mode 3. Autrement dit, on passe directement au Mode 1 lorsque la cinquième ligne de commande est désactivée en fin de Mode 3. C'est ce que représente l'étape de réveil E12a, insérée entre la première étape E11 et la deuxième étape E12. Le microcontrôleur est aussitôt alimenté sous la tension régulée. Une des premières instructions d'un programme d'initialisation activé lors de l'étape de réveil consiste alors à activer la quatrième ligne de commande ce qui permet de passer en Mode 2 pendant la deuxième étape d'écoute E12b, analogue à la deuxième étape E12. L'étape de réveil est alors aussi brève que possible.

Il est bien-sûr possible d'éviter matériellement le passage transitoire par le Mode 1 lors d'une sortie du Mode 3, en remplaçant par exemple l'interrupteur commandé 139 par un transistor polarisé par une résistance disposée entre la base et la première ligne d'alimentation 111, et donc normalement conducteur, mais dont la base est raccordée à la masse par l'interrupteur commandé 139.

Alternativement, le passage transitoire par le Mode 1 est mis à profit pour alimenter le capteur de position, s'il n'est pas possible de l'alimenter pendant le Mode 2 du fait d'un besoin en tension trop important pour ce capteur. Le passage transitoire par le Mode 1 devient alors un avantage. La figure 8 représente une troisième variante du procédé, avec insertion d'une étape de fonctionnement réduit E13b, après la troisième étape E13. L'étape de fonctionnement réduit consiste à activer le Mode 2 d'alimentation après l'activation de l'organe de commutation. La tension de sortie du convertisseur utilisée en Mode 2 est alors déterminée pour respecter une tension minimum de maintien de l'organe de commutation dans son état activé.

Par exemple, si la tension de maintien d'un relais 12 volts est égale à 6 volts, alors c'est cette valeur qui est choisie comme tension de sortie du convertisseur, en fonctionnement réduit. Le relais restant activé, le moteur de l'actionneur est donc normalement alimenté pendant cette étape de fonctionnement réduit.

En présence simultanée d'un organe de commutation et d'un capteur de position, la tension de sortie du convertisseur en fonctionnement réduit sera la plus grande des valeurs de la tension de maintien de l'organe de commutation et de la tension minimum de fonctionnement du capteur de position.

Alternativement, on dédouble l'étape de fonctionnement réduit avec, en alternance, une première sous-étape dont la tension de sortie est fixée par la tension de maintien de l'organe de commutation et une deuxième sous étape dont la tension de sortie est fixée par la tension minimum de fonctionnement du capteur de position, si celle-ci est sensiblement supérieure à la tension de maintien. Le capteur de position n'est activé (par l'interrupteur commandé 117) que pendant cette deuxième sous-étape.

La figure 9 représente une quatrième variante du procédé, dans lequel une deuxième étape complémentaire E30 s'insère dans la première étape E13. Cette deuxième étape complémentaire comprend la mise en court circuit du régulateur 150 pendant le fonctionnement en Mode 3. Il est ainsi possible de diminuer encore les pertes dans le régulateur. Cette étape est particulièrement justifiée si le régulateur utilisé présente une tension de déchet importante.

L'invention permet de réduire au plus les consommations d'énergie en abaissant au maximum les tensions de sortie du convertisseur et notamment par l'usage de deux niveaux de tension réduite.

La figure 10 décrit en une étape unique E10 un procédé de fonctionnement de l'actionneur selon l'invention dans son mode de réalisation préféré et en toute généralité. L'étape unique consiste à adapter dynamiquement le Mode d'alimentation à au moins trois états de fonctionnement de l'actionneur.

Les diodes Zener utilisées en figure 1 ont été décrites dans le cas d'un fonctionnement parallèle. Il est facile pour l'homme du métier de prévoir un montage série (avec d'autres valeurs de tension) ou encore de combiner un montage série-parallèle. Il est aussi possible d'utiliser un montage par référence de tension ajustable, comme décrit dans l'art antérieur.

L'adaptation dynamique peut comprendre un grand nombre de seuils. Ceux-ci peuvent être fixés par un convertisseur numérique analogique disposé dans le microcontrôleur de l'unité de contrôle, ce qui permet une plus grande souplesse dans leur détermination dans chaque cas d'application.

## Revendications

1. Actionneur domotique (100) comprenant un moteur (101) pour la manoeuvre d'un élément mobile dans un bâtiment, un récepteur d'ordres (108), une unité de contrôle (110), un convertisseur (120) à sortie unique, au moins un organe de commutation (104) destiné à l'alimentation du moteur, **caractérisé en ce que** l'organe de commutation et l'entrée d'un régulateur (150) sont directement raccordés à la sortie du convertisseur tandis que l'unité de contrôle et le récepteur d'ordres sont raccordés à la sortie du régulateur, **en ce que**, dans un mode de sommeil, l'unité de contrôle (110) est alimentée avec une tension d'alimentation inférieure à la tension minimum d'alimentation du récepteur d'ordres (108) et **en ce que** ledit actionneur (100) comprend un moyen de commande (139) d'un premier niveau réduit de la tension de sortie du convertisseur, activable par l'unité de contrôle, ce premier niveau réduit étant inférieur à une tension minimum d'activation de l'organe de commutation.

2. Actionneur domotique selon la revendication 1 **caractérisé en ce qu'**il comprend un moyen de commande (141) d'un deuxième niveau réduit de la tension de sortie du convertisseur, ce deuxième niveau réduit étant inférieur au premier niveau réduit.

3. Actionneur domotique selon l'une des revendications précédentes **caractérisé en ce que** le moyen de commande d'un niveau réduit relie à une masse électrique du convertisseur l'anode d'une diode Zener (125) dont la cathode est raccordée à une entrée de contrôle du convertisseur.

4. Actionneur domotique selon l'une des revendications précédentes **caractérisé en ce qu'**il comprend un moyen (144) de mise en court-circuit du régulateur entre son entrée et sa sortie.

5. Actionneur domotique selon l'une des revendications précédentes **caractérisé en ce que** le premier niveau réduit est égal ou supérieur à la tension de seuil du régulateur.

6. Actionneur domotique selon l'une des revendications précédentes **caractérisé en ce que** le deuxième niveau réduit est inférieur à la tension de seuil du régulateur.

7. Actionneur domotique selon l'une des revendications précédentes **caractérisé en ce que** l'unité de contrôle comprend un timer (151) dont une tension de fonctionnement est inférieure à une tension nominale du récepteur d'ordres.

8. Actionneur domotique selon l'une des revendications précédentes **caractérisé en ce que** le deuxième niveau réduit est égal à la tension minimum de fonctionnement du timer.

9. Actionneur domotique selon l'une des revendications précédentes **caractérisé en ce qu'**une sortie du timer constitue le moyen de commande du deuxième niveau réduit de la tension de sortie du convertisseur.

10. Actionneur domotique selon l'une des revendications précédentes **caractérisé en ce que** le convertisseur est de type de type abaisseur Alternatif-Continu (AC-DC).

11. Actionneur domotique selon l'une des revendications précédentes **caractérisé en ce que** le convertisseur est de type Continu-Continu (DC-DC).

12. Actionneur domotique selon l'une des revendications précédentes **caractérisé en ce que** l'organe de commutation (104) comprend un relais ou un triac si le moteur est de type alternatif à induction et **en ce que** l'organe de commutation comprend un onduleur si le moteur est de type brushless à aimants permanents.

13. Procédé d'alimentation et de contrôle d'un actionneur domotique(100) comprenant un moteur (101) pour la manoeuvre d'un élément mobile dans un bâtiment, un récepteur d'ordres (108), une unité de contrôle (110), un convertisseur (120) à sortie unique, au moins un organe de commutation (104) destiné à l'alimentation du moteur,
**caractérisé en ce que** l'organe de commutation et l'entrée d'un régulateur (150) sont directement raccordés à la sortie du convertisseur tandis que l'unité de contrôle et le récepteur d'ordres sont raccordés à la sortie du régulateur,
**en ce que** ledit actionneur (100) comprend un moyen de commande (139) d'un premier niveau réduit de la tension de sortie du convertisseur, activable par l'unité de contrôle, ce premier niveau réduit étant inférieur à une tension minimum d'activation de l'organe de commutation ,
et **en ce que** le procédé comprend :
- une étape (E10) d'adaptation dynamique du niveau de tension de sortie du convertisseur à un état de l'actionneur ;
- une étape de sommeil (E11) ; et
- une étape d'alimentation de l'unité de contrôle (110) avec une tension d'alimentation inférieure à la tension minimum d'alimentation du récepteur d'ordres (108), pendant l'étape de sommeil (E11).

14. Procédé d'alimentation et de contrôle selon la revendication 13 **caractérisé en ce qu'**il comprend successivement l'étape de sommeil, une étape d'écoute et une étape de fonctionnement si un signal de commande est détecté pendant l'étape d'écoute, chaque étape définissant un état de l'actionneur, et dans lequel la tension de sortie du convertisseur est égale à une tension permettant l'activation de l'organe de commutation pendant l'étape de fonctionnement.

15. Procédé d'alimentation et de contrôle selon la revendication 13 ou la revendication 14, **caractérisé en ce que**, pendant l'étape de sommeil, le procédé comprend une étape de non-alimentation d'un capteur de position de l'actionneur.

## Patentansprüche

1. Domotikaktuator (100), umfassend einen Motor (101) für die Bewegung eines in einem Gebäude bewegbaren Elements, einen Befehlsempfänger (108), eine Steuereinheit (110), einen Konverter (120) mit einzigem Ausgang, mindestens ein Umschaltorgan (104), das für die Versorgung des Motors bestimmt ist, **dadurch gekennzeichnet, dass** das Umschaltorgan und der Eingang eines Reglers (150) direkt mit dem Ausgang des Konverters verbunden sind, wogegen die Steuereinheit und der Befehlsempfänger mit dem Ausgang des Reglers verbunden sind und dass, in einem Schlummermodus, die Steuereinheit (110) mit einer Versorgungsspannung versorgt wird, die unter der Mindestversorgungsspannung des Befehlsempfängers (108) liegt und dass der Aktuator ein Steuermittel (139) eines ersten reduzierten Niveaus der Ausgangsspannung des Konverters umfasst, aktivierbar durch die Steuereinheit, wobei dieses erste reduzierte Niveau unter einer Mindestaktivierungsspannung des Umschaltorgans liegt.

2. Domotikaktuator nach Anspruch 1, **dadurch gekennzeichnet, dass** er ein Steuermittel (141) eines zweiten reduzierten Niveaus der Ausgangsspannung des Konverters umfasst, wobei dieses zweite reduzierte Niveau kleiner als das erste reduzierte Niveau ist.

3. Domotikaktuator nach einem der vorangehenden Ansprüche, **dadurch gekennzeichnet, dass** das Steuermittel eines reduzierten Niveaus die Anode einer Zener-Diode (125), deren Kathode an einen Steuereingang des Konverters angeschlossen ist, mit einer elektrischen Masse des Konverters verbindet.

4. Domotikaktuator nach einem der vorangehenden Ansprüche, **dadurch gekennzeichnet, dass** er ein Kurzschlussmitte (144) des Reglers zwischen seinem Eingang und seinem Ausgang umfasst.

5. Domotikaktuator nach einem der vorangehenden Ansprüche, **dadurch gekennzeichnet, dass** das erste reduzierte Niveau gleich oder größer als die Grenzwertspannung des Reglers ist.

6. Domotikaktuator nach einem der vorangehenden Ansprüche, **dadurch gekennzeichnet, dass** das zweite reduzierte Niveau kleiner als die Grenzwertspannung des Reglers ist.

7. Domotikaktuator nach einem der vorangehenden Ansprüche, **dadurch gekennzeichnet, dass** die Steuereinheit einen Timer (151) umfasst, von dem eine Betriebsspannung kleiner als eine Nennspannung des Befehlsempfängers ist.

8. Domotikaktuator nach einem der vorangehenden Ansprüche, **dadurch gekennzeichnet, dass** das zweite reduzierte Niveau gleich der Mindestbetriebsspannung des Timers ist.

9. Domotikaktuator nach einem der vorangehenden Ansprüche, **dadurch gekennzeichnet, dass** ein Ausgang des Timers das Steuermittel des zweiten reduzierten Niveaus der Ausgangsspannung des Konverters bildet.

10. Domotikaktuator nach einem der vorangehenden Ansprüche, **dadurch gekennzeichnet, dass** der Konverter vom Typ Wechselstrom-Gleichstrom-Abwärtskonverter (AC-DC) ist.

11. Domotikaktuator nach einem der vorangehenden Ansprüche, **dadurch gekennzeichnet, dass** der Konverter vom Typ Gleichstrom-Gleichstrom-Konverter (DC-DC) ist.

12. Domotikaktuator nach einem der vorangehenden Ansprüche, **dadurch gekennzeichnet, dass** das Umschaltorgan (104) ein Relais oder ein Triac umfasst, wenn der Motor vom Typ Wechselstrom mit Induktion ist und dass das Umschaltorgan eine Wechselrichter umfasst, wenn der Motor vom Typ Brushless mit Dauermagneten ist.

13. Verfahren zur Versorgung und Steuerung eines Domotikaktuators (100), umfassend einen Motor (101) für die Bewegung eines in einem Gebäude bewegbaren Elements, einen Befehlsempfänger (108), eine Steuereinheit (110), einen Konverter (120) mit einzigem Ausgang, mindestens ein Umschaltorgan (104), das für die Versorgung des Motors bestimmt ist,
**dadurch gekennzeichnet, dass** das Umschaltorgan und der Eingang eines Reglers (150) direkt mit dem Ausgang des Konverters verbunden sind, wogegen die Steuereinheit und der Befehlsempfänger mit dem Ausgang des Reglers verbunden sind,
dass der Aktuator (100) ein Steuermittel (139) eines ersten reduzierten Niveaus der Ausgangsspannung des Konverters umfasst, aktivierbar durch die Steuereinheit, wobei dieses erste reduzierte Niveau unter einer Mindestaktivierungsspannung des Umschaltorgans liegt,
und dass das Verfahren umfasst:
- einen Schritt (E10) der dynamischen Anpassung des Ausgangsspannungsniveaus des Konverters an einen Zustand des Aktuators,
- einen Schlummerschritt (E11) und
- einen Versorgungsschritt der Steuereinheit (110) mit einer Versorgungsspannung unter der Mindestversorgungsspannung des Befehlsempfängers (108) während des Schlummerschritts (E11).

14. Verfahren zur Versorgung und Steuerung nach Anspruch 13, **dadurch gekennzeichnet, dass** es sukzessiv den Schlummerschritt, einen Abfrageschritt und einen Betriebsschritt umfasst, wenn ein Steuersignale während des Abfrageschritts ermittelt wird, wobei jeder Schritt einen Zustand des Aktuators definiert, und wobei die Ausgangsspannung des Konverters gleich einer Spannung ist, die die Aktivierung des Umschaltorgans während des Betriebsschritts erlaubt.

15. Verfahren zur Versorgung und Steuerung nach Anspruch 13 oder Anspruch 14, **dadurch gekennzeichnet, dass** während des Schlummerschritts das Verfahren einen Nichtversorgungsschritt eines Positionssensors des Aktuators umfasst.

## Claims

1. A home automation actuator (100) comprising a motor (101) for maneuvering a mobile element in a building, a command receiver (108), a control unit (110), a single output converter (120), at least one switching member (104) intended to supply power to the motor, **characterized in that** the switching member and the input of a regulator (150) are directly connected to the output of the converter whereas the control unit and the command receiver are connected to the output of the regulator and **in that**, in a sleep mode, the control unit (110) is supplied with a supply voltage lower than the minimum feeding voltage of the command receiver (108) and **in that** said actuator (100) comprises a control means (139) for controlling a first reduced level of the output voltage of the converter, which can be activated by the control unit, this first reduced level being lower than a minimum voltage for activating the switching member.

2. The home automation actuator as claimed in claim 1, **characterized in that** it comprises a control means (141) for controlling a second reduced level of the output voltage of the converter, this second reduced level being lower than the first reduced level.

3. The home automation actuator as claimed in one of the preceding claims, **characterized in that** the control means for controlling a reduced level links the anode of a Zener diode (125), the cathode of which is connected to a control input of the converter, to an electric ground of the converter.

4. The home automation actuator as claimed in one of the preceding claims, **characterized in that** it comprises a means (144) for short-circuiting the regulator between its input and its output.

5. The home automation actuator as claimed in one of the preceding claims, **characterized in that** the first reduced level is equal to or greater than the threshold voltage of the regulator.

6. The home automation actuator as claimed in one of the preceding claims, **characterized in that** the second reduced level is lower than the threshold voltage of the regulator.

7. The home automation actuator as claimed in one of the preceding claims, **characterized in that** the control unit includes a timer (151), an operating voltage of which is lower than a nominal voltage of the command receiver.

8. The home automation actuator as claimed in one of the preceding claims, **characterized in that** the second reduced level is equal to the minimum operating voltage of the timer.

9. The home automation actuator as claimed in one of the preceding claims, **characterized in that** an output of the timer constitutes the control means for controlling the second reduced level of the output voltage of the converter.

10. The home automation actuator as claimed in one of the preceding claims, **characterized in that** the converter is of AC-DC step-down type.

11. The home automation actuator as claimed in one of the preceding claims, **characterized in that** the converter is of DC-DC type.

12. The home automation actuator as claimed in one of the preceding claims, **characterized in that** the switching member (104) comprises a relay or a triac if the motor is of AC induction type and **in that** the switching member comprises an inverter if the motor is of brushless permanent magnet type.

13. A method for powering and controlling a home automation actuator (100) comprising a motor (101) for maneuvering a mobile element in a building, a command receiver (108), a control unit (110), a single output converter (120), at least one switching member (104) intended to supply power to the motor,
**characterized in that** the switching member and the input of a regulator (150) are directly connected to the output of the converter whereas the control unit and the command receiver are connected to the output of the regulator,
and **in that** said actuator (100) comprises a control means (139) for controlling a first reduced level of the output voltage of the converter, which can be activated by the control unit, this first reduced level being lower than a minimum voltage for activating the switching member,
and **in that** the method comprises:
- a dynamical adaptation step (E10) of the voltage output level of the converter to a state of the actuator;
- a sleep step (E11); and
- a supply step of the control unit (110) with a supply voltage lower than a minimum voltage for supplying the command receiver (108), during the sleep step (E11).

14. The power supply and control method as claimed in claim 13, **characterized in that** it comprises, in succession, a sleep step, a listening step and an operating step if a control signal is detected during the listening step, each step defining a state of the actuator, and in which the output voltage of the converter is equal to a voltage allowing for the activation of the switching member during the operating step.

15. The power supply and control method as claimed in claim 13 or claim 14, **characterized in that**, during the sleep step, the method comprises a step of not powering a position sensor of the actuator.
